# EUROPÄISCHE PATENTSCHRIFT

(11) **EP 1 459 871 B1**
(45) Veröffentlichungstag und Bekanntmachung des Hinweises auf die Patenterteilung: **06.04.2011**
(21) Anmeldenummer: 04100652.9
(22) Anmeldetag: 19.02.2004
(51) Int. Cl.: B29C 67/00

(54) **Verfahren und Vorrichtung zur Herstellung von dreidimensionalen Objekten mittels Mikrowellenstrahlung sowie dadurch hergestellter Formkörper**
Method and apparatus for manufacturing three dimensional objects using microwave radiation and shaped body produced according to this method
Procédé et dispositif pour la fabrication des objets tridimensionnels au moyen de radiation à micro-ondes et pièce moulée ainsi obtenue

(30) Priorität: 15.03.2003 DE 10311438; 02.12.2003 DE 10356193
(43) Veröffentlichungstag der Anmeldung: 22.09.2004
(73) Patentinhaber: Evonik Degussa GmbH, 45128 Essen (DE)
(72) Erfinder: Grebe, Maik, 44805, Bochum (DE); Monsheimer, Sylvia, 45721, Haltern am See (DE); Baumann, Franz-Erich, 48249, Dülmen (DE)

(56) Entgegenhaltungen:
- EP-A- 0 231 588
- EP-A- 0 705 682
- EP-A- 0 888 868
- WO-A-92/08200
- US-A- 5 980 813
- US-A1- 2002 105 114

## Beschreibung

Die Erfindung betrifft ein Verfahren zur Herstellung von dreidimensionalen Objekten aus einem pulverförmigen Substrat durch Verbinden, z. B. durch Verschmelzen oder Versintern von Teilen des Substrates, wobei die zum Verbinden des Substrates notwendige Wärmenergie durch Mikrowellenstrahlung über einen Suszeptor erzeugt und über diesen an die Teilbereiche des Substrates abgegeben wird.

Die zügige Bereitstellung von Prototypen ist eine in der jüngsten Zeit häufig gestellte Aufgabe. Im Stand der Technik werden zum einen die Methode der Stereolithographie beschrieben, wobei diese den Nachteil hat, dass aufwändige Stützkonstruktionen während der Anfertigung des Prototypen aus einer Flüssigkeit (Harz) notwendig sind und die erhaltenen Prototypen relativ schlechte mechanische Eigenschaften aufweisen, die auf die begrenzte Anzahl an Einsatzstoffen zurückzuführen sind.

Das andere im Stand der Technik häufig genannte Verfahren, welches gut für den Zweck des Rapid Prototyping geeignet ist, ist das selektive Laser-Sintern (SLS), welches bereits eine große Verbreitung gefunden hat. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren relativ schnell wieder zu einer festen Masse. Durch wiederholtes Belichten von immer neu aufgebrachten Schichten können mit diesem Verfahren komplexe dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6,136,948 und WO 96/06881 (beide DTM Corporation) beschrieben. Die im Stand der Technik beschriebenen SLS-Verfahren haben den Nachteil, dass für dieses Verfahren eine kostspielige Lasertechnik notwendig ist. Sowohl der als Energiequelle fungierende Laser als auch die für die Aufbereitung und Lenkung des Laserstrahls notwendigen optischen Einrichtungen wie Linsen, Aufweiter und Umlenkspiegel sind extrem teuer und empfindlich.
Es sind weitere Verfahren zum Rapidprototyping entwickelt worden, die jedoch (noch) nicht zur Marktreife gelangt sind. In WO 01/38061 wird ein Verfahren zur Herstellung von Prototypen beschrieben, welches darauf basiert, dass Sinterinhibitoren eingesetzt werden, die ein Versintern, ausgelöst durch Zuführung von Energie, von pulverförmigem Substrat in ausgewählten Bereichen verhindern. Bei diesem Verfahren kann auf eine aufwändige Lasertechnik verzichtet werden. Eine spezifische Zuführung von Wärme ist mit diesem Verfahren allerdings nicht möglich. Nachteilig an diesem Verfahren ist z. B. dass das umgebende Pulver, welches nicht aufgeschmolzen wurde, den Inhibitor enthält und daher nicht recycelt werden kann. Zudem muss für dieses Verfahren eine Software neu entwickelt werden, da eben nicht wie sonst der Querschnitt des Teils bedruckt wird, sondern die Umgebung. Bei Hinterschneidungen und Querschnittsänderungen ist ein großflächiger Auftrag von Inhibitoren notwendig. Zudem besteht die Gefahr der Bildung von Wärmestaus.

In US 5 338 611 wird der Einsatz von Mikrowellenstrahlung zum Schmelzen von Polymeren beschrieben, wobei pulverförmige Polymere und nanoskaliges Russ eingesetzt werden. Die Herstellung von Prototypen wird nicht beschrieben. In DE 197 27 677 werden Prototypen durch Einwirken eines fokussierten Mikrowellenstrahls auf ausgewählte Bereiche von pulverförmigen Schichten erzeugt. Durch Einwirken des gezielten Mikrowellenstrahl werden die pulverförmigen Substrate in der Schicht sowie mit den pulverförmigen Substraten in der darunter liegenden Schicht durch Verkleben, Versintern oder Verschmelzen verbunden. Auch bei diesem Verfahren ist eine aufwändige Technik notwendig, um die Mikrowellenstrahlung nur auf die ausgewählten Bereiche gelangen zu lassen.

EP 888 868 offenbart die Merkmale der Oberbegriffe der Ansprüche 1 und 20.

Die im Stand der Technik bekannten Verfahren zur Herstellung von Prototypen sind alle relativ aufwändig in Bezug auf die verwendete Technik. Insbesondere der Einsatz von Lasern oder fokussierter Mikrowellenstrahlung erfordert eine hohe Präzision und damit teure und störungsanfällige Apparaturen. Für das Herstellen von Prototypen sind die bekannten Verfahren zwar geeignet, für die Anwendung im Rapid Manufacturing oder als Heimanwendung sind diese Verfahren allerdings ungeeignet.

Aufgabe der vorliegenden Erfindung war es deshalb ein Verfahren zur Herstellung von dreidimensionalen Objekten bereitzustellen, welches mit einer einfachen, damit preisgünstigen und störungsunanfälligen Apparatur durchgeführt werden kann. Die Bauteile sollten bevorzugt robust ausgeführt sein, wobei auf Bauteile aus Apparaturen des täglichen Bedarfs zurückgegriffen werden können sollte.

Überraschenderweise wurde gefunden, dass es relativ einfach möglich ist mittels Mikrowellenstrahlung, z. B. auch mittels Mikrowellenküchengeräten, dreidimensionale Objekte aus pulverförmigen Substraten herzustellen, in dem auf eine Schicht aus einem pulverförmigen Substrat, welches Mikrowellenstrahlung nicht oder nur schlecht absorbiert, ein Suszeptor auf den zu verbindenden Bereichen der Schicht aufgetragen wird, der die Mikrowellenstrahlung absorbieren kann und die absorbierte Energie in Form von Wärme an das ihn umgebende Substrat abgibt, wodurch das Substrat der Schicht bzw. gegebenenfalls einer darunter oder darüber liegenden Schicht in den genannten Bereichen durch Verschmelzen oder Versintern verbunden wird. Das Aufbringen des Suszeptors kann mit einem Druckkopf, ähnlich dem eines Tintenstrahldruckers, erfolgen.

Gegenstand der vorliegenden Erfindung ist deshalb ein Verfahren zur Herstellung eines dreidimensionalen Objektes, welches dadurch gekennzeichnet ist,
dass es die Schritte
a) Bereitstellen einer Schicht von pulverförmigen Substrat,
b) selektives Aufbringen zumindest eines Mikrowellen absorbierenden Suszeptors auf zu behandelnde Bereiche der Schicht aus a), wobei die Bereiche, auf welche der Suszeptor gebracht wird, ausgewählt werden gemäß dem Querschnitt des dreidimensionalen Objektes und zwar in der Weise, dass nur auf die Bereiche Suszeptor aufgebracht wird, die den Querschnitt des dreidimensionalen Objekts ausmachen, und
c) zumindest einmaliges Behandeln der Schicht mit Mikrowellenstrahlung, so dass die mit dem Suszeptor ausgestatteten Bereiche der Schicht sowie gegebenenfalls mit dem Suszeptor ausgestatteten Bereiche der darunter liegenden Schicht durch Verschmelzen miteinander verbunden werden,
umfasst sowie Formkörper hergestellt nach diesem Verfahren.

Ebenfalls ist Gegenstand der vorliegenden Erfindung eine Vorrichtung zur schichtweisen Herstellung von dreidimensionalen Objekten, welche dadurch gekennzeichnet ist, dass die Vorrichtung
- eine bewegliche Vorrichtung zur schichtförmigen Auftragung eines pulverförmigen Substrates auf eine Arbeitsplattform oder eine gegebenenfalls schon auf der Arbeitsplattform vorhandene Schicht eines behandelten oder unbehandelten pulverförmigen Substrates (2),
- eine in der x,y- Ebene bewegliche Vorrichtung (3) zur Auftragung eines Suszeptors (4) auf ausgewählte Bereiche der Schicht aus pulverförmigem Substrat und
- einen Mikrowellengenerator, geeignet zur Erzeugung von Mikrowellenstrahlung im Bereich von 300 MHz bis 300 GHz (5),
aufweist.

Das erfindungsgemäße Verfahren hat den Vorteil, dass es keine aufwändig gerichtete Strahlung, wie etwa Laserstrahlung oder eng fokussierte Mikrowellenstrahlung einsetzt. Die gezielte Einwirkung von Energie an bestimmten Stellen der Schicht oder einer aus mehreren Schichten aufgebauten Matrix wird durch den durch Mikrowellenstrahlen angeregtem Suszeptor erzielt, der auf den gewünschten Bereichen der Schicht bzw. den Schichten der Matrix aufgebracht wird.

Durch das erfindungsgemäße Verfahren ist ein schichtweiser automatisierter Aufbau eines dreidimensionalen Objektes durch Verwendung von Mikrowellenstrahlung in Kombination mit einem geeigneten Suszeptor, einfach möglich. Nicht mit Suszeptor behandeltes Pulver kann einfach wiederverwendet werden, was bei Verfahren, die Inhibitoren einsetzen, nicht möglich ist.

Die Vorrichtung ist ähnlich einfach handhabbar wie ein üblicher Tintenstrahldrucker und kann somit z. B. an einen PC angeschlossen werden, besonders, wenn die Mikrowellenbestrahlung anschließend in der in den meisten Haushalten ohnehin vorhandenen Mikrowelle durchgeführt wird. Damit wird ein 3D-Druck auch für den normalen Haushalt erschwinglich und handhabbar. Das erfindungsgemäße Verfahren hat weiterhin den Vorteil, dass das umliegende Material ohne weiteres wiederverwendet werden kann. Außerdem können direkt spezielle Eigenschaften wie elektrische Leitfähigkeit oder Farben "mitgedruckt" werden. Dem Teil können auf diese Weise selektiv ausgewählte Eigenschaften mitgegeben werden.

Das Funktionsprinzip des vorliegenden erfindungsgemäßen Verfahrens zur Herstellung von dreidimensionalen Objekten basiert prinzipiell auf den bei allen anderen Verfahren zum Rapid-Prototyping verwendetem Prinzip. Das dreidimensionale Objekt wird schichtartig aufgebaut. Der Aufbau geschieht dadurch, dass Teile von Flüssigkeitsschichten (Stereolithographie) oder Pulverschichten (Lasersintern) miteinander bzw. mit Teilen von darunter liegenden Schichten verfestigt bzw. verbunden werden, in dem diesen Teilen der Schichten Energie zugeführt wird. Die Teile der Schichten, denen keine Energie zugeführt wurde, liegen weiterhin als Flüssigkeit oder Pulver vor. Durch Wiederholen des Aufbringens und Verbindens bzw. Verfestigens von Pulver bzw. Flüssigkeit wird schichtweise ein dreidimensionales Objekt erhalten. Nach Entfernen des nicht umgesetzten Pulvers bzw. der nicht umgesetzten Flüssigkeit wird ein dreidimensionales Objekt erhalten, dessen Auflösung (in bezug auf die Konturen) von der Schichtdicke und der Partikelgröße des verwendeten pulverförmigen Substrates abhängig ist.

Im Unterschied zu den bislang bekannten Verfahren wird die Energie nicht direkt den zu verbindenden Substraten zugeführt sondern über einen Suszeptor, der die Energie absorbiert und in Form von Wärmeenergie an das ihn umgebende Substrat abgibt. Die Energie wird den Suszeptoren im erfmdungsgemäßen Verfahren in Form von Mikrowellenstrahlung zugeführt, welche von den Suszeptoren absorbiert, in Wärmenergie umgewandelt und an ihre direkten pulverförmigen Nachbarn des Substrates, welche nicht oder in nicht ausreichendem Masse in der Lage sind, Mikrowellenstrahlung zu absorbieren, abgegeben wird. In nicht ausreichendem Maße bedeutet im vorliegenden Fall, dass durch Absorption von Mikrowellenstrahlung das pulverförmige Substrat nicht soweit erwärmt werden kann, dass es eine Verbindung durch Verschmelzen oder Versintern mit benachbarten Substratpartikeln eingehen kann bzw. die dazu benötigte Zeit sehr lang ist. Die von dem Suszeptor abgegebene Wärme ist allerdings ausreichend, um das dem Suszeptor benachbarte pulverförmige Substrat mit sich selbst und auch dem Suszeptor durch Verschmelzen oder Versintern zu verbinden. Auf diese Weise werden mit dem erfindungsgemäßen Verfahren dreidimensionale Objekte durch Verschmelzen oder Versintern eines pulverförmigen Substrats hergestellt.

Das Verbinden des Substrates in bestimmten Bereichen innerhalb der Schicht sowie der Schichten untereinander erfolgt wie beim Lasersintern und den anderen Verfahren zum Rapid-Prototyping wiederum durch Verbinden, insbesondere Verschmelzen oder Versintern des pulverförmigen Substrates. Das Funktionsprinzip des Rapid-Prototypings kann z. B. US 6,136,948 und WO 96/06881 entnommen werden.

Das Aufbringen der Suszeptoren in Schritt b), der üblicherweise computergesteuert unter Verwendung von CAD-Anwendungen zur Berechnung der Querschnittsflächen erfolgt, hat zur Folge, dass nur behandelte pulverförmige Substrate in einem nachfolgenden Behandlungsschritt c) verbunden werden. Der Suszeptor wird deshalb nur auf selektierte Bereiche der Schicht aus a) aufgebracht, die zum Querschnitt des zu erstellenden dreidimensionalen Objektes gehören. Das Aufbringen selbst kann z. B. durch einen mit Düsen ausgestatteten Druckkopf erfolgen. Nach dem abschließenden Behandlungsschritt c) der letzten Schicht wird mit dem erfindungsgemäßen Verfahren eine Matrix mit teilweise verbundenem Pulvermaterial erhalten, die nach Entfernen des nicht verbundenen Pulvers das massive dreidimensionale Objekt freigibt.

Das erfindungsgemäße Verfahren wird im folgenden beispielhaft beschrieben, ohne dass die Erfindung darauf beschränkt sein soll.

Das erfindungsgemäße Verfahren zur Herstellung eines dreidimensionalen Objektes, zeichnet sich dadurch aus, dass es die Schritte
a) Bereitstellen einer Schicht von pulverförmigen Substrat,
b) selektives Aufbringen zumindest eines Mikrowellen absorbierenden Suszeptors auf zu behandelnde Bereiche der Schicht aus a), wobei die Bereiche, auf welche der Suszeptor gebracht wird, ausgewählt werden gemäß dem Querschnitt des dreidimensionalen Objektes und zwar in der Weise, dass nur auf die Bereiche Suszeptor aufgebracht werden, die den Querschnitt des dreidimensionalen Objekts ausmachen, und
c) zumindest einmaliges Behandeln der Schicht mit Mikrowellenstrahlung, so dass die mit dem Suszeptor ausgestatteten Bereiche der Schicht sowie gegebenenfalls mit dem Suszeptor ausgestatteten Bereiche der darunter liegenden Schicht durch Verschmelzen oder Versintern miteinander verbunden werden,
umfasst.

Der Schritt c) kann jeweils dann durchgeführt werden, wenn die Schritte a) und b) x-mal ausgeführt worden sind, mit x gleich 1 bis Anzahl der durchgeführten Schritte a) und b). Je nach verwendetem Pulvermaterial kann damit die vom Material abhängige Eindringtiefe der Mikrowellenstrahlung berücksichtigt werden. So kann es in Abhängigkeit vom Pulvermaterial und der Anzahl der Schritte a) vorkommen, dass eine einmalige Behandlung mit Mikrowellenstrahlung nicht ausreichend ist, alle mit Suszeptor behandelten Bereiche der im Bauraum vorhandenen Schichten von Pulvermaterial zu verbinden. In einem solchen Fall kann es vorteilhaft sein, den Schritt c) z. B. jeweils nach 2, 3, 4, 5, 6, 7, 8, 9, 10, 11, 12, 13, 14, 15, 20, 30, 40 oder 50-maligem Durchführen der Schritte a) und b) durchzuführen. Außerdem kann es vorteilhaft sein, wenn der Schritt c) erst dann durchgeführt wird, nachdem die Schritte a) und b) zumindest zweimal ausgeführt worden sind, weil auf diese Weise ein festerer Verbund der Schichten untereinander erzielt wird. In einer besonderen Ausführungsform des erfindungsgemäßen Verfahrens werden die Schritte a) und b) so oft wiederholt, bis alle Querschnittsflächen, aus denen das dreidimensionale Objekt aufgebaut ist, in einer Matrix vorhanden sind, und die äußeren Begrenzungen des Objektes durch die Grenze zwischen Pulvermaterial mit aufgebrachtem Suszeptor und unbehandeltem Pulvermaterial gebildet wird und anschließend der Schritt c) durchgeführt wird. Auf diese Weise ist nur eine einmalige Behandlung mit Mikrowellenstrahlung erforderlich, was einen bedeutend geringeren Energieaufwand bedeutet.

In einer weiteren Ausführungsvariante des erfindungsgemäßen Verfahrens wird zu Beginn der Herstellung des dreidimensionalen Objektes einmal der Schritt c) durchgeführt wird, nachdem einmal Schritt a), anschließend Schritt b) und darauffolgend noch einmal Schritt a) durchgeführt worden ist und anschließend die weiteren Schritte in der Reihenfolge b), a), c) durchgeführt werden. Bei dieser Ausführungsvariante ist eine mit Suszeptor behandelte Pulverschicht jeweils mit einer unbehandelten Pulverschicht abgedeckt. Beim Schritt c) werden somit nicht die Partikel der obersten Schicht z. B. durch Aufschmelzen bzw. Versintern verbunden, sondern die Partikel der darunter liegenden Schicht, wobei an der Grenze zwischen den Schichten die Partikel der beiden Schichten bereits verbunden werden. Auf diese Weise kann eine besonders haltbare Verbindung zwischen den Schichten erreicht werden. Zudem werden die Übergänge von einer Schicht zur nächsten Schicht beim fertigen Objekt weicher. Der Schritt c) kann wiederum jeweils dann durchgeführt werden, wenn die Schritte b) und a) x-mal ausgeführt worden sind, mit x gleich 1 bis Anzahl der durchgeführten Schritte b) und a), wobei die oben genannten Vorteile erzielt werden.

Der Schritt c) kann, wenn er jeweils nach dem ein- oder mehrfachen Ausführen von Schritt a) und b) bzw. b) und a) erfolgt, direkt im Bauraum ausgeführt werden. Erfolgt nur eine Behandlung gemäß Schritt c) so kann dieser im unteren Bauraum oder in einem anderen geeigneten Platz der Vorrichtung erfolgen. Ebenso ist es möglich, dass der Schritt c) in einer anderen Apparatur als der Apparatur für die Durchführung der Schritte a) und b) durchgeführt wird. So kann z. B. die mittels der Schritte a) und b) estellte Matrix aus behandelten Pulverschichten z. B. in eine handelsübliche Mikrowelle für Speisenzubereitung überführt werden, in welcher der Schritt c) durchgeführt wird. Durch diese Möglichkeiten ist das erfindungsgemäße Verfahren insbesondere für Heimanwendungen geeignet.

Das Bereitstellen der pulverförmigen Schicht kann z. B. durch Aufbringen eines Pulvermaterials als Substrat auf eine Bodenplatte bzw. falls bereits vorhanden auf eine schon vorhandene, gemäß Schritt b) oder c) behandelte Schicht erfolgen. Das Aufbringen kann durch Aufrakeln, Aufrollen, Aufschütten und anschließendes Abziehen oder ähnliche Verfahren erfolgen. Einzige Vorraussetzung, die das Bereitstellen der Schicht erfüllen muss, ist die, dass die Schicht eine gleichmäßige Höhe aufweist. Bevorzugt weist die in Schritt a) bereitgestellte Schicht eine Höhe von kleiner 1 mm, vorzugsweise von 50 bis 500 µm und besonders bevorzugt von 100 bis 200 µm auf. Die Höhe der Schichten bestimmt dabei die Auflösung und damit die Glätte der äußeren Struktur des hergestellten dreidimensionalen Objekts. Die Bodenplatte oder aber die Apparatur zur Bereitstellung der Schicht kann in der Höhe beweglich ausgeführt sein, so dass nach der Durchführung eines Schrittes b) oder c) entweder die erhaltene Schicht um die Höhe der als nächstes aufzubringenden Schicht abgesenkt oder die Apparatur um die Höhe der nächsten Schicht gegenüber der vorangegangenen Schicht angehoben werden kann.

Die Höhe der gemäß Schritt a) bereitgestellten Schicht ist unter anderem auch von der mittleren Partikelgröße bzw. der maximalen Partikelgröße abhängig. So versteht es sich von selbst, dass mit Partikeln mit einer Partikelgröße von 150 µm keine festen und kompakten Schichten gleicher Höhe erstellt werden können, da das Volumen zwischen den Partikeln einen sehr großen Schrumpf beim Schritt c) erleiden würden.

Besonders bevorzugt als pulverförmiges Substrat eingesetztes Pulvermaterial weist eine mittlere Korngröße (d₅₀) von 10 bis 150 µm, besonders bevorzugt von 20 bis 100 µm und ganz besonders bevorzugt von 40 bis 70 µm auf. Je nach Verwendungszweck kann es aber auch vorteilhaft sein, ein Pulvermaterial einzusetzen, welches besonders kleine Partikel, aber auch besonders große Partikel aufweist. Zum Erzielen von dreidimensionalen Gegenständen mit möglichst hoher Auflösung und möglichst glatter Oberfläche kann es vorteilhaft sein, wenn Partikel eingesetzt werden, die eine mittlere Partikelgröße von 10 bis 45 µm, vorzugsweise von 10 bis 35 µm und ganz besonders bevorzugt von 20 bis 30 µm aufweist.

Feines Material kleiner 20 µm, insbesondere kleiner 10 µm ist kaum verarbeitbar, da es nicht rieselt, und die Schüttdichte drastisch sinkt, wodurch mehr Hohlräume entstehen können. Zur leichteren Handhabung kann es vorteilhaft sein, wenn Partikel eingesetzt werden, die eine mittlere Partikelgröße von 60 bis 150 µm, vorzugsweise von 70 bis 120 µm und ganz besonders bevorzugt von 75 bis 100 µm aufweist.

Als pulverförmiges Substrat wird vorzugsweise solches Pulvermaterial eingesetzt, welches durch Vermahlen, Fällen und/oder anionische Polymerisation oder durch Kombinationen davon, speziell Fällung eines etwas zu groben Pulvers und anschließendes Nachmahlen, oder Fällen und anschließendes Klassieren hergestellt wurde.

Die Korngrößenverteilung kann bei den angegebenen mittleren Korngrößen der Pulvermaterialien beliebig gewählt werden. Vorzugsweise werden Pulvermaterialien eingesetzt, die eine breite oder enge Korngrößenverteilung, vorzugsweise eine enge Korngrößenverteilung aufweisen. Besonders bevorzugte Pulvermaterialien für die Verwendung in dem erfindungsgemäßen Verfahren weisen eine Korngrößenverteilung auf, bei der maximal 20 %, vorzugsweise 15 % und ganz besonders bevorzugt maximal 5 % der Partikel eine Abweichung in der Partikelgröße in Bezug auf die mittlere Korngröße von mehr als 50 %, aufweisen. Die Korngrößenverteilung ist durch übliche Verfahren der Klassierung, wie z. B. Windsichten etc. einstellbar. Durch eine möglichst enge Korngrößenverteilung werden bei dem erfindungsgemäßen Verfahren dreidimensionale Objekte erhalten, die eine sehr gleichmäßige Oberfläche haben und, falls vorhanden, sehr gleichmäßige Poren aufweisen.

Zumindest ein Teil des eingesetzten pulverförmigen Substrates kann amorph, kristallin oder teilkristallin sein. Bevorzugtes Pulvermaterial weist eine lineare oder verzweigte Struktur auf.

Besonders bevorzugtes Pulvermaterial, welches in dem erfindungsgemäßen Verfahren verwendet wird, weist zumindest zum Teil eine Schmelztemperatur von 50 bis 350 °C, vorzugsweise von 70 bis 200 °C auf.

Als Substrate eignen sich in dem erfindungsgemäßen Verfahren Stoffe, die im Vergleich zu den gewählten Suszeptoren schlechter von Mikrowellenstrahlung erwärmt werden. Das eingesetzte pulverförmige Substrat sollte zudem eine ausreichende Fließfähigkeit im erwärmten Zustand vorweisen. Als pulverförmige Substrate können insbesondere Polymere oder Copolymere, vorzugsweise ausgewählt aus Polyester, Polyvinylchlorid, Polyacetal, Polypropylen, Polyethylen, Polystyrol, Polycarbonat, Poly(N-methylmethacrylimide) (PMMI), Polymethylmethacrylate (PMMA), Ionomer, Polyamiden, Copolyester, Copolyamide, Terpolymere, Acrylnitril-Butadien-Styrol-Copolymere (ABS) oder Gemische davon, eingesetzt werden.

Besonders bevorzugt wird im erfindungsgemäßen Verfahren ein Pulvermaterial als pulverförmiges Substrat eingesetzt, welches ein Polyamid, vorzugsweise zumindest ein Polyamid 6, Polyamid 11 und/oder Polyamid 12 oder ein Copolyester oder ein Copolyamid aufweist. Durch die Verwendung von Polyamiden lassen sich besonders formstabile dreidimensionale Formkörper herstellen. Besonders bevorzugt ist die Verwendung von Polyamid 12 Pulver, vorzugsweise hergestellt wie in DE 197 08 946 oder auch DE 44 21 454 beschrieben und besonders bevorzugt eine Schmelztemperatur und eine Schmelzenthalpie aufweisend wie in EP 0 911 142 angegeben. Als bevorzugte Copolyamide oder Copolyester werden bevorzugt solche eingesetzt, wie sie unter dem Markennamen VESTAMELT bei der Degussa AG erhältlich sind. Besonders bevorzugte Copolyamide weisen eine Schmelztemperatur, bestimmt mittels Differential Scanning Calometrie (DSC) von 76 bis 159 °C, vorzugsweise von 98 bis 139 °C und ganz besonders bevorzugt von 110 bis 123 °C auf. Die Copolyamide können z. B. durch Polymerisation von Gemischen von geeigneten Monomeren, z. B. ausgewählt aus Laurinlactam und/oder Caprolactam, als bifunktionelle Komponente, Korksäure, Azelainsäure, Dodecandisäure, Adipinsäure und/oder Sebacinsäure als Säurefunktion tragende Komponente und 1,6-Hexandiamin, Isophorondiamin und/oder Methylpenta-methylen-diamin als Diamin hergestellt werden.

Um eine bessere Verarbeitbarkeit der pulverförmigen Substrate zu erreichen kann es vorteilhaft sein, dass ein Pulvermaterial eingesetzt wird, welches Additive aufweist. Solche Additive können z. B. Rieselhilfen sein. Besonders bevorzugt weist das eingesetzte pulverförmige Substrat von 0,05 bis 5 Gew.-%, vorzugsweise von 0,1 bis 1 Gew.-% an Additiven auf. Rieselhilfen können z. B. pyrogene Kieselsäuren, Stearate oder andere literaturbekannte Rieselhilfen, wie z. B. Tricalciumphosphat, Calciumsilicate, Al₂O₃, MgO, MgCO₃ oder ZnO sein. Pyrogene Kieselsäure wird beispielsweise unter dem Markennamen Aerosil® von der Degussa AG angeboten. Es kann zudem vorteilhaft sein, wenn das eingesetzte pulverförmige Substrat laseraktivierbare Additive aufweist. Durch solche Additive ist z. B. das nachträgliche Beschriften oder Ausrüsten der dreidimensionalen Objekte mit elektrischen Leiterbahnen möglich. Verwendbare Additive werden z. B. in DE 4402329 beschrieben.

Neben oder an Stelle von solchen zum Teil anorganischen Rieselhilfen oder anderen Additiven kann ein erfindungsgemäß eingesetztes pulverförmiges Substrat auch anorganische Füllkörper aufweisen. Die Verwendung solcher Füllkörper hat den Vorteil, dass diese ihre Form durch die Behandlung beim Verbinden im Wesentlichen beibehalten und somit den Schrumpf des dreidimensionalen Objektes verringern. Zudem ist es durch die Verwendung von Füllkörpern z. B. möglich, die plastischen und physikalischen Eigenschaften der Objekte zu verändern. So können durch Verwendung von Pulvermaterial, welches Metallpulver aufweist, sowohl die Transparenz und Farbe als auch die magnetischen oder elektrischen Eigenschaften des Objektes eingestellt werden. Als Füllstoffe bzw. -körper kann das Pulvermaterial z. B. Glaspartikel, Keramikpartikel oder Metallpartikel aufweisen. Typische Füllstoffe sind z. B. Metallgriese, Aluminiumpulver, Stahl- oder Glaskugeln. Besonders bevorzugt werden Pulvermaterialien eingesetzt, die als Füllkörper Glaskugeln aufweisen. In einer bevorzugten Ausführungsvariante weist das erfindungsgemäße Pulvermaterial von 1 bis 70 Gew.-%, vorzugsweise von 5 bis 50 Gew.-% und ganz besonders bevorzugt von 10 bis 40 Gew.-% an Füllstoffen auf.
Neben oder an Stelle von anorganischen Rieselhilfen oder Füllstoffen kann ein erfindungsgemäß eingesetztes pulverförmiges Substrat auch anorganische oder organische Pigmente aufweisen. Diese Pigmente können neben Farbpigmenten, die die Farberscheinung des zu erstellenden dreidimensionalen Körpers bestimmen, auch Pigmente sein, die andere physikalische Eigenschaften der herzustellenden dreidimensionalen Gegenstände beeinflussen, wie z. B. Magnetpigmente oder Leitfähigkeitspigmente, wie z. B. leitfähig modifiziertes Titandioxid oder Zinnoxid, die den Magnetismus bzw. die Leitfähigkeit des Gegenstandes verändern. Besonders bevorzugt weist das einzusetzende Pulvermaterial aber anorganische oder organische Farbpigmente, ausgewählt aus Kreide, Ocker, Umbra, Grünerde, Terra di Siena gebrannt, Graphit, Titanweiß (Titandioxid), Bleiweiß, Zinkweiß, Lithopone, Antimonweiß, Ruß, Eisenoxidschwarz, Manganschwarz, Cobaltschwarz, Antimonschwarz, Bleichromat, Mennige, Zinkgelb, Zinkgrün, Cadmiumrot, Cobaltblau, Berliner Blau, Ultramarin, Manganviolett, Cadmiumgelb, Schweinfurter Grün, Molybdatorange, Molybdatrot, Chromorange, Chromrot, Eisenoxidrot, Chromoxidgrün, Strontiumgelb, Metalleffektpigmente, Perlglanzpigmente, Leuchtpigmente mit Fluoreszenz- und/oder Phosphoreszenzpigmenten, Umbra, Gummigutt, Knochenkohle, Kasseler Braun, Indigo, Chlorophyll, Azofarbstoffe, Indigoide, Dioxazinpigmente, Chinacridonpigmente, Phthalocyaninpigmente, Isoindolinonpigmente, Perylenpigmente, Perinonpigmente, Metallkomplexpigmente, Alkaliblaupigmente und Diketopyrrolopyrrol auf. Weitere Informationen zu einsetzbaren Pigmenten können z. B. Römpp Lexikon Chemie - Version 2.0, Stuttgart/New York: Georg Thieme Verlag 1999 sowie der dort angegebenen Literatur entnommen werden.

Die eingesetzten Pigmente können Korngrößen aufweisen wie für das Pulvermaterial beschrieben. Häufig weisen die Pigmente allerdings Korngrößen auf, die deutlich kleiner sind als die mittleren Korngrößen der eingesetzten Polymere. Die Pigmente können z. B. ähnlich wie die Suszeptoren durch Düsen, wie sie bei Druckköpfen verwendet werden, aufgetragen werden oder in den eingesetzten pulverförmigen Substraten, insbesondere in den Polymerpartikeln vorhanden sein. Besonders bevorzugt weist das erfindungsgemäße Pulvermaterial Polymerpartikel auf, die ein oder mehrere der genannten Pigmente -bevorzugt mit Ausnahme von Weißpigmenten allein- aufweisen. Der Anteil der Pigmente am Pulvermaterial beträgt vorzugsweise von 0,01 bis 25 Gew.-%, vorzugsweise von 0,1 bis 10 Gew.-% und besonders bevorzugt von 1 bis 3 Gew.-%. Die Möglichkeit pigmentierte Substanzen verwenden zu können, ist ein weiterer Vorteil des erfindungsgemäßen Verfahrens gegenüber Laser-Sinter-Verfahren, bei denen Farbpigmente oder metallisierte Pigmente den Laserstrahl behindern bzw. Abschwächen und somit eine Verarbeitung solcher Materialien unmöglich machen.

Als Pulvermaterial können auch Substanzen eingesetzt werden, die als Sonderform der oben genannten Füllkörper oder Pigmente betrachtet werden können. Bei dieser Art des Pulvermaterials weist das Pulver Körner aus einem ersten Material mit einer Größe, die kleiner als die oben genannten Dimensionen für das Pulvermaterial ist, auf. Die Körner sind beschichtet mit einer Schicht eines zweiten Materials, wobei die Dicke der Schicht so gewählt ist, dass das Pulvermaterial aus Kombination von Korn des ersten Materials und Beschichtung mit dem zweiten Material eine Größe wie oben angegeben aufweist. Die Körner des ersten Materials weisen vorzugsweise eine Größe auf, die eine Abweichung von der Größe des Pulvermaterials von weniger als 25 %, vorzugsweise weniger als 10 % und besonders bevorzugt weniger als 5 % aufweist. Das zweite Material, welches die Beschichtung der Körner darstellt, ist ein Material, welches im Vergleich zu den gewählten Suszeptoren schlechter von Mikrowellenstrahlung erwärmt werden. Das zweite Material sollte zudem eine ausreichende Fließfähigkeit im erwärmten Zustand vorweisen und sich durch Wärmeeinwirkung, wobei die Wärme vom Suszeptor bereitgestellt wird, versintern oder verschmelzen lassen. Als Beschichtungsmaterial können die pulverförmigen Substrate (die Pulvermaterialien) insbesondere die oben genannten Polymere oder Copolymere, vorzugsweise ausgewählt aus Polyester, Polyvinylchlorid, Polyacetal, Polypropylen, Polyethylen, Polystyrol, Polycarbonat, Poly(N-methylmethacrylimide) (PMMI), Polymethylmethacrylate (PMMA), Ionomer, Polyamiden, Copolyester, Copolyamide, Terpolymere, Acrylnitril-Butadien-Styrol-Copolymere (ABS) oder Gemische davon, oder Phenolharze aufweisen. Das erste Material dieser Sonderform des Pulvermaterials kann Körner z.B. aus Sand, Keramik, Metall und/oder Legierungen umfassen. Besonders bevorzugtes Pulvermaterial dieser Art ist mit Phenolharz oder thermoplastischem Kunststoff beschichteter Sand, sogenannter Formsand.

Wenn der Suszeptor in der Lage ist, eine ausreichende Wärmemenge zu übertragen, ist es ebenso möglich, als Pulvermaterial Metallpulver, insbesondere Pulver von niedrigschmelzenden Metallen, wie z. B. Blei oder Zinn oder Legierungen, die z. B. Zinn oder Blei aufweisen, einzusetzen. Auch dieses Pulvermaterial weist vorzugsweise die oben genannten Dimensionen auf. (Bei der Verwendung von Metallpulver ist zunächst zu prüfen, ob das Metall für eine Behandlung mit Mikrowellen geeignet ist oder ob es zu Funkenbildung bzw. einer Zerstörung des Mikrowellengenerators kommt. Eine solche Überprüfung ist durch einfache Vorversuche möglich.)

Mit dem erfindungsgemäßen Verfahren sind also dreidimensionalen Objekt herstellbar, die mit einer oder mehreren funktionalisierten Schichten ausgerüstet werden können. Beispielsweise kann eine Funktionalisierung, wie z. B. die Ausrüstung mit leitfähigen Eigenschaften des ganzen Formteils oder aber auch nur bestimmter Bereiche durch Auftragen entsprechender Pigmente oder Substanzen analog zum Suszeptor oder durch Bereitstellen einer Schicht aus einer pulverförmigen Substanz, die diese Pigmente aufweist, erfolgen.

Das Aufbringen des Suszeptors kann analog zu der in WO 01/38061 beschriebenen Aufbringung des Inhibitors erfolgen. Vorzugsweise erfolgt das Aufbringen des Suszeptors mit einer in x,y-Ebene beweglichen Vorrichtung. Die Vorrichtung weist eine Möglichkeit auf, flüssige und/oder pulverförmige Suszeptoren an definierten Stellen der gemäß Schritt a) bereitgestellten Schicht an diese abzugeben. Die Vorrichtung kann z. B. ein Druckkopf, wie er in einem Tintenstrahldrucker eingesetzt wird, sein. Die Ansteuerung des Vorrichtung zur Positionierung des Druckkopfes kann ebenfalls in gleicher Weise wie die Ansteuerung des Druckkopfes eines Tintenstrahldruckers erfolgen. Mit dieser Vorrichtung wird der Suszeptor an den Stellen der gemäß Schritt a) bereitgestellten Schicht aufgebracht an denen das Substrat durch Versintern oder Verschmelzen verbunden werden soll.

Im erfindungsgemäßen Verfahren können alle Suszeptoren eingesetzt werde, die durch Mikrowellenstrahlung erwärmt werden. Hierzu zählen pulverförmige Stoffe, wie z. B. Pulver von Metallen, Metallverbindungen, Keramikpulver, Graphit, Russ oder Aktivkohle oder protische Flüssigkeiten, ausgewählt aus der Gruppe gesättigter ein- oder mehrwertiger linearer, verzweigter oder cyclischer aliphatischer Alkohole, in Substanz oder im Gemisch mit Wasser oder Wasser alleine. Als protische Flüssigkeiten werden bevorzugt Glycerin, Trimethylolpropan, Ethylenglykol, Diethylenglykol oder Butandiol oder Mischungen davon in Substanz oder im Gemisch mit Wasser eingesetzt. Es ist ebenfalls möglich, Mischungen von festen, flüssigen oder festen und flüssigen Suszeptoren einzusetzen. Ebenfalls kann es vorteilhaft sein, als Feststoffe vorliegende Suszeptoren in Flüssigkeiten zu suspendieren, die keine Suszeptoren sind, um eine bessere Verteilung der als Feststoff vorliegenden Suszeptoren über die gesamte Höhe der bereitgestellten Schicht zu erreichen. Ein weiterer Vorteil kann erzielt werden, wenn zur besseren Benetzung des Substrates der Suszeptor, insbesondere der flüssige Suszeptor mit Tensiden versehen wird.

In diesem erfindungsgemäßen Verfahren sind außerdem viele Suszeptoren/Substrat Kombinationen denkbar, wobei für das Verfahren eine ausreichend großer Unterschied von Suszeptor und Substrat in der Fähigkeit durch Mikrowellenstrahlung erwärmt zu werden wichtig ist, damit am Ende des Verfahrens eine Matrix erhalten wird, die eine klare Grenze zwischen verbundenem (also mit Suszeptor behandeltem) Substrat und nicht verbundenem Substrat erreicht wird. Nur auf diese Weise ist sichergestellt, dass das erstellte dreidimensionale Objekt eine ausreichend glatte Kontur aufweist und von dem nicht verbundenen Substrat einfach gelöst werden kann.

Um eine ausreichend große und lange Wärmeübertragung von Suszeptor auf das Substrat zu ermöglichen sollte der Siedepunkt des Suszeptors oder bei einem Gemisch von Suszeptoren zumindest eines Suszeptors größer als der Schmelzpunkt des verwendeten Substrates sein. Die Dosierung des Suszeptors sowie die Eigenschaften der Pulvers und des Suszeptors müssen aufeinander abgestimmt sein, damit der Suszeptor, insbesondere bei Einsatz eines flüssigen Suszeptors, nicht durch die Schichten verläuft, sondern ausschließlich von dem zu benetzenden Pulver aufgenommen wird. Die Abstimmung kann z. B. durch das Einstellen Viskosität und die verwendete Menge des Suszeptors erfolgen. Dabei ist die Menge des verwendeten flüssigen Suszeptors insbesondere von der Schichtdicke des Pulvers, von der Porosität des Pulvers und von der Teilchengröße abhängig. Für die einzelnen Materialkombinationen kann die optimale Menge und Viskosität in einfachen Vorversuchen ermittelt werden. Zur Einstellung der Viskosität können bekannte Viskositätsvermittler, wie pyrogene Kieselsäuren aber auch organische Mittel verwendet werden. Der Suszeptor kann in der Schmelze bzw. im Formteil verbleiben. Das kann im Fall von Verstärkung oder bei der Einstellung anderer Eigenschaften durch den Suszeptor (elektrische oder magnetische Leitfähigkeit) sogar von Vorteil sein.

Die für die Erwärmung des Suszeptors notwendige Energie wird in Form von Mikrowellenstrahlung zugeführt. Es kann vorteilhaft sein, die zu versinternden Schichten durch Zuführung von Wärme auf eine erhöhte Temperatur zu bringen oder auf einer erhöhten Temperatur zu halten, die unterhalb der Schmelz- oder Sintertemperatur des eingesetzten Polymers liegt. Auf diese Weise kann die durch Mikrowellenenergie einzubringende Energie bzw. Leistung verringert werden. Nachteilig an einer solchen Ausführung ist allerdings, dass spezielle Vorrichtungen eingesetzt werden müssen, die häufig in Haushalten nicht vorhanden sind, wie z. B. kombinierte Backöfen mit eingebauter Mikrowelle. Sollten solche Geräte allerdings eine weitere Verbreitung finden, ist es auch bei der Haushaltsanwendung des erfindungsgemäßen Verfahrens möglich, einen Teil der benötigten Sinterenergie nicht durch Mikrowellenenergie zuzuführen.

Die Behandlung mit Mikrowellenstrahlung gemäß Schritt c) kann wie oben beschrieben nach jedem Schritt b) erfolgen oder aber erst nach dem alle Schichten mit dem Suszeptor behandelt wurden. Insbesondere bei der Verwendung eines flüssigen Suszeptors hat es sich als vorteilhaft erwiesen, die Mikrowellenbehandlung jeweils direkt nach der Behandlung einer Schicht gemäß Schritt b), vorzugsweise direkt im Bauraum vorzunehmen, da sonst die Gefahr besteht, dass sich der flüssige Suszeptor auch in ungewünschte Teile der Schicht bzw. der aus mehreren Schichten aufgebauten Matrix verteilt.

Die für das erfindungsgemäße Verfahren erforderliche Mikrowellenstrahlung wird von einem, vorzugsweise externen Mikrowellengenerator erzeugt und kann im Frequenzbereich von 300 MHz bis 300 GHz liegen. Die in industriellen Prozessen eingesetzten und einer staatlichen Freigabe unterliegenden Frequenzen betragen in der Regel von 430 bis 6800 MHz (Encyclopedia of Chemical Processing and Design, Vol.30, p. 202ff, Marcel Dekker, N.Y.-Basel, 1989). Im erfindungsgemäßen Verfahren wird deshalb bevorzugt eine Mikrowellenstrahlung im Frequenzbereich von 430 bis 6800 MHz eingesetzt. Die vom Mikrowellengenerator erzeugte Strahlung kann gegebenenfalls polarisiert und/oder gefiltert werden.

Mittels des erfindungsgemäßen Verfahrens sind dreidimensionale Formkörper herstellbar. Diese schichtweise hergestellten dreidimensionalen Objekte liegen am Ende nach Abschluss des erfindungsgemäßen Verfahrens in einer Matrix, die aus mehreren Schichten gebildet wird vor. Aus dieser Matrix, die aus verbundenem und nicht verbundenem pulverförmigen Substrat sowie Suszeptor besteht, kann das Objekt entnommen werden, während das nicht verbundene Substrat, gegebenenfalls nach einer Aufarbeitung z. B. durch Sieben, erneut eingesetzt werden kann. Die erfindungsgemäßen Formkörper können Füllkörper, ausgewählt aus Glaskugeln, Kieselsäuren oder Metallpartikeln aufweisen.

Das erfindungsgemäße Verfahren wird vorzugsweise in einer erfindungsgemäßen Vorrichtung zur schichtweisen Herstellung von dreidimensionalen Objekten durchgeführt, welche dadurch gekennzeichnet ist, dass sie
- eine bewegliche Vorrichtung zur schichtförmigen Auftragung eines pulverförmigen Substrates auf eine Arbeitsplattform oder eine gegebenenfalls schon auf der Arbeitsplattform vorhandene Schicht eines behandelten oder unbehandelten pulverförmigen Substrates, wie z. B. eine Rakel,
- eine in der x,y- Ebene bewegliche Vorrichtung zur Auftragung eines Suszeptors auf ausgewählte Bereiche der Schicht aus pulverförmigem Substrat, wie z. B. einen Druckkopf, und
- einen Mikrowellengenerator, geeignet zur Erzeugung von Mikrowellenstrahlung im Bereich von 300 MHz bis 300 GHz, vorzugsweise von 430 bis 6800 MHz, mit welchem sich der Suszeptor so weit erwärmen lässt, dass sich das Substrat, in den Bereichen, in denen der Suszeptor auf das Substrat aufgebracht wurde, durch Verschmelzen oder Versintern verbindet,
aufweist.

Die Vorrichtung ist vorzugsweise mit mehreren Vorratsbehältern ausgerüstet, aus denen das zu verarbeitende pulverförmige Substrat der Vorrichtung zur Erzeugung der Schichten zugeführt werden kann und der oder die eingesetzten Suszeptoren der in der x,y- Ebene bewegliche Vorrichtung zur Auftragung eines Suszeptors auf ausgewählte Bereiche der Schicht aus pulverförmigem Substrat zugeführt werden kann. Durch Verwendung von Druckköpfen mit mehreren Düsen und dem Vorsehen eines Mischers kann erreicht werden, dass an bestimmten Zonen der Schicht, z. B. an besonders filigranen Bereichen oder z. B. am Rand des zu erstellenden Objektes eine andere Mischungen von Suszeptoren als im Kernbereich des zu erstellenden Objektes eingesetzt werden. Auf diese Weise kann eine unterschiedliche Energiezufuhr an unterschiedlichen Positionen der Schicht erzeugt werden.

Ebenfalls Gegenstand der vorliegenden Erfindung ist das Pulvermaterial wie vorab beschrieben, welches zum Einsatz in dem erfindungsgemäßen Verfahren geeignet ist und welches sich insbesondere dadurch auszeichnet, dass es eine mittlere Korngröße von 10 bis 150 µm und zumindest ein Polymer oder Copolymer, ausgewählt aus Polyvinylchlorid, Polyester, Polyacetal, Polypropylen, Polyethylen, Polystyrol, Polycarbonat, PMMA, PMMI, Ionomer, Polyamiden, Copolyester, Copolyamiden, Terpolymeren oder ABS oder Gemische davon, aufweist. Besonders bevorzugt weist das Pulver Polyamid 11, Polyamid 12, Copolyamid oder Copolyester oder Mischungen davon auf. Besonders bevorzugt weist das Pulver Polymerpartikel auf, die eingefärbt sind und eine andere Farbe als Weiß aufweisen.

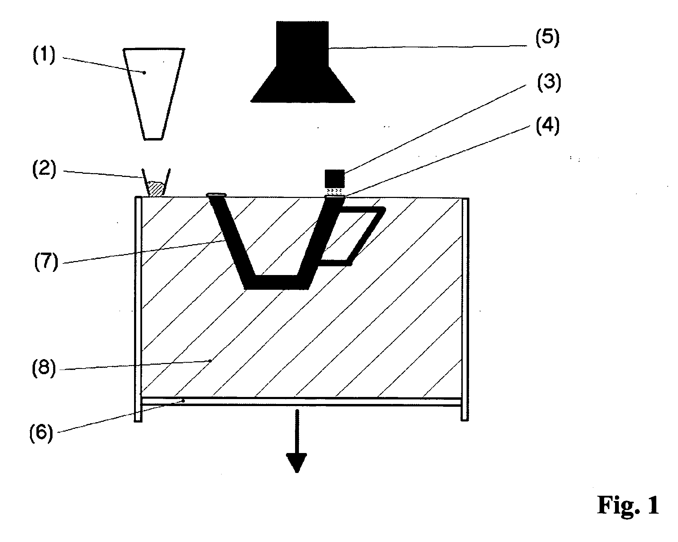

Das erfindungsgemäße Verfahren und die erfindungsgemäße Vorrichtung wird an Hand der Figur Fig. 1 näher erläutert, ohne dass die Erfindung auf diese Ausführungsform beschränkt sein soll. Fig. 1 gibt schematisch die erfindungsgemäße Vorrichtung wieder. Auf einem beweglichen Boden (6), wird unbehandeltes pulverförmiges Substrat (2), welches in einem Vorratsbehälter (1) vorgelegt wird, zu einer Matrix (8) aufgebaut. Das Substrat wird mittels eines Rakels (2) zu dünnen Schichten auf dem beweglichen Boden bzw. zuvor aufgebrachten Schichten verteilt. Über eine in x,y- Ebene bewegliche Vorrichtung (3) wird der Suszeptor (4) auf ausgewählte Bereiche der Schicht aus pulverförmigem Substrat aufgebracht. Nach jeder Behandlung mit einem Suszeptor wird eine neue Schicht des pulverförmigen Substrates aufgebracht. Mittels eines Mikrowellengenerator, geeignet zur Erzeugung von Mikrowellenstrahlung im Bereich von 300 MHz bis 300 GHz (5), werden die Stellen des aufgebrachten Substrats, die mit dem Suszeptor behandelt wurden, zu einem dreidimensionalen Objekt, wie z. B. einer Tasse (7) verbunden.

Das erfindungsgemäße Verfahren wird an Hand der nachfolgenden Beispiele näher erläutert, ohne dass die Erfindung auf diese beschränkt sein soll.

### Beispiel 1: Herstellung einer Tasse aus einem Copolyamid

In der durch Fig. 1 beschriebenen Vorrichtung wird ein Modell einer Tasse mit dem Außendurchmesser von 80 mm, einer Höhe von 60 mm und einer Wandstärke von 1,5 mm aus einem Copolyamid -Pulver (VESTAMELT 840, Degussa AG, Marl) hergestellt. Als Suszeptor wird eine auf Graphit basierende Suspension verwendet, die 40 Massen-% Wasser, 40 Massen-% Graphit und 20 Massen-% Isopropanol aufweist. Die Vorrichtung hat eine Betriebstemperatur von ca. 40 °C. Die Frequenz des Mikrowellengenerators beträgt 2450 MHz. Die Schichtdicke beträgt 0,15 mm. Pro Schicht werden 700 Watt Leistung für jeweils 30 Sekunden eingebracht. Der D₅₀-Wert des Pulvers beträgt 60 µm.

### Beispiel 2: Herstellung eines Zugstabes aus Polyamid 12

In der schon beschriebenen Vorrichtung wird ein Zugstab mit der Länge von 160 mm, einer Breite von 10 mm und einer Höhe von 4 mm aus einem Polyamid 12-Pulver (EOSINT P PA 2200, EOS GmbH Electro Optical Systems, Krailling, Deutschland) hergestellt. Als Suszeptor kommt Ethylenglykol zum Einsatz. Die Vorrichtung hat eine Betriebstemperatur von ca. 160 °C. Die Frequenz des Mikrowellengenerators beträgt 2450 MHz. Die Höhe in der die Pulverschichten aufgetragen wurden betrug 0,15 mm. Pro Schicht werden 750 Watt Leistung für 45 Sekunden eingebracht. Das verwendete Pulver wies einen d₅₀-Wert von 55 µm auf.

## Patentansprüche

1. Verfahren zur Herstellung eines dreidimensionalen Objektes, wobei es ein
a) Bereitstellen einer Schicht von pulverförmigen Substrat umfasst gekenzeichnet durch die Schritte
b) selektives Aufbringen zumindest eines Mikrowellen absorbierenden Suszeptors auf zu behandelnde Bereiche der Schicht aus a), wobei die Bereiche, auf welche der Suszeptor gebracht wird, ausgewählt werden gemäß dem Querschnitt des dreidimensionalen Objektes und zwar in der Weise, dass nur auf die Bereiche Suszeptor aufgebracht wird, die den Querschnitt des dreidimensionalen Objekts ausmachen, und
c) zumindest einmaliges Behandeln der Schicht mit Mikrowellenstrahlung, so dass die mit dem Suszeptor ausgestatteten Bereiche der Schicht sowie gegebenenfalls mit dem Suszeptor ausgestatteten Bereiche der darunter liegenden Schicht durch Verschmelzen oder Versintern miteinander verbunden werden.

2. Verfahren nach Anspruch 1,
**dadurch gekennzeichnet,**
**dass** der Schritt c) durchgeführt wird, nachdem die Schritte a) und Schritt b) jeweils x-mal ausgeführt worden sind, mit x gleich 1 bis Anzahl der durchgeführten Schritte a) und b).

3. Verfahren nach Anspruch 1,
**dadurch gekennzeichnet,**
**dass** zu Beginn einmal der Schritt c) durchgeführt wird, nachdem einmal Schritt a), anschließend Schritt b) und darauffolgend noch einmal Schritt a) durchgeführt worden ist und anschließend die weiteren Schritte in der Reihenfolge b), a) und c) durchgeführt werden.

4. Verfahren nach einem der Ansprüche 1 bis 3,
**dadurch gekennzeichnet,**
**dass** Schritte a) und b) so oft wiederholt werden bis alle Querschnittsflächen, aus denen das dreidimensionale Objekt aufgebaut ist, in einer Matrix vorhanden sind, und die äußeren Begrenzungen des Objektes durch die Grenze zwischen Pulvermaterial mit aufgebrachtem Suszeptor und unbehandeltem Pulvermaterial gebildet wird und anschließend der Schritt c) durchgeführt wird.

5. Verfahren nach Anspruch 4,
**dadurch gekennzeichnet,**
**dass** der Schritt c) im unteren Bauraum der Vorrichtung durchgeführt wird.

6. Verfahren nach einem der Ansprüche 1 bis 5,
**dadurch gekennzeichnet,**
**dass** der Schritt c) in einer anderen Apparatur als der Apparatur für die Durchführung der Schritte a) und b) durchgeführt wird.

7. Verfahren nach einem der Ansprüche 1 bis 6,
**dadurch gekennzeichnet,**
**dass** der Schritt c) in einer handelsüblichen Mikrowelle für Speisenzubereitung durchgeführt wird.

8. Verfahren nach Anspruch einem der Ansprüche 1 bis 7,
**dadurch gekennzeichnet,**
**dass** das eingesetzte pulverförmige Substrat eine mittlere Korngröße von 10 bis 150 µm aufweist.

9. Verfahren nach zumindest einem der Ansprüche 1 bis 8,
**dadurch gekennzeichnet,**
**dass** Mikrowellenstrahlung im Frequenzbereich 430 bis 6800 MHz eingesetzt wird.

10. Verfahren nach zumindest einem der Ansprüche 1 bis 9,
**dadurch gekennzeichnet,**
**dass** als Suszeptor Pulver von Metallen bzw. Metallverbindungen, Keramikpulver, Graphit oder Aktivkohle oder protische Flüssigkeiten, ausgewählt aus der Gruppe gesättigter ein- oder mehrwertiger linearer, verzweigter oder cyclischer aliphatischer Alkohole, in Substanz oder im Gemisch mit Wasser oder Wasser alleine, eingesetzt wird.

11. Verfahren nach Anspruch 10,
**dadurch gekennzeichnet**,
als protische Flüssigkeit Glycerin, Trimethylolpropan, Ethylenglykol, Diethylenglykol oder Butandiol oder Mischungen davon in Substanz oder im Gemisch mit Wasser eingesetzt wird.

12. Verfahren nach einem der Ansprüche Anspruch 1 bis 11,
**dadurch gekennzeichnet,**
**dass** als pulverförmiges Substrat Polymere eingesetzt werden.

13. Verfahren nach Anspruch 12,
**dadurch gekennzeichnet,**
**dass** als pulverförmiges Substrat Polymere oder Copolymere, vorzugsweise ausgewählt aus Polyester, Polyvinylchlorid, Polyacetal, Polypropylen, Polyethylen, Polystyrol, Polycarbonat, PMMI, PMMA, Ionomer, Polyamiden, Copolyester, Copolyamide, Terpolymere, ABS oder Gemische davon, eingesetzt werden.

14. Verfahren nach einem der Ansprüche 1 bis 13,
**dadurch gekennzeichnet,**
**dass** ein pulverförmiges Substrat eingesetzt wird, welches von 0,05 bis 5 Gew.-% einer Rieselhilfe aufweist.

15. Verfahren nach einem der Ansprüche 1 bis 14,
**dadurch gekennzeichnet,**
**dass** ein pulverförmiges Substrat eingesetzt wird, das anorganische Füllkörper aufweist.

16. Verfahren nach Anspruch 15,
**dadurch gekennzeichnet,**
**dass** als Füllkörper Glaskugeln eingesetzt werden.

17. Verfahren nach einem der Ansprüche 1 bis 16,
**dadurch gekennzeichnet,**
**dass** ein pulverförmiges Substrat eingesetzt wird, das anorganische oder organische Pigmente aufweist.

18. Verfahren nach einem der Ansprüche 1 bis 17,
**dadurch gekennzeichnet,**
**dass** pulverförmiges Substrat eingesetzt wird, welches laseraktivierbare Additive aufweist.

19. Verfahren nach einem der Ansprüche Anspruch 1 bis 11,
**dadurch gekennzeichnet,**
**dass** als pulverförmiges Substrat mit einem Material, welches sich durch Wärmeeinwirkung versintern oder verschmelzen lässt, beschichtete Körner aus Sand, Keramik, Metall und/oder Legierungen oder Metallpulver eingesetzt wird.

20. Vorrichtung zur schichtweisen Herstellung von dreidimensionalen Objekten, wobei die Vorrichtung
- eine bewegliche Vorrichtung zur schichtförmigen Auftragung eines pulverförmigen Substrates auf eine Arbeitsplattform oder eine gegebenenfalls schon auf der Arbeitsplattform vorhandene Schicht eines behandelten oder unbehandelten pulverförmigen Substrates, und
- einen Mikrowellengenerator, geeignet zur Erzeugung von Mikrowellenstrahlung im Bereich von 300 MHz bis 300 GHz,
aufweist, **gekennzeichnet durch** eine in der x,y- Ebene bewegliche Vorrichtung zur Auftragung eines Suszeptors auf ausgewählte Bereiche der Schicht aus pulverförmigem Substrat.

21. Formkörper, hergestellt nach einem Verfahren gemäß einem der Ansprüche 1 bis 19.

22. Formkörper gemäß Anspruch 21,
**dadurch gekennzeichnet,**
**dass** der Formkörper Füllkörper, ausgewählt aus Glaskugel, Kieselsäuren oder Metallpartikeln oder Aluminiumpartikel aufweist.

## Claims

1. Process for producing a three-dimensional object, which comprises
a) providing a layer of pulverulent substrate, **characterized by** the following steps:
b) selectively applying at least one microwave-absorbing susceptor to regions to be treated of the layer from a), where the regions to which the susceptor is applied are selected in accordance with the cross section of the three-dimensional object, and specifically in such a way that the susceptor is applied only to the regions which make up the cross section of the three-dimensional object, and
c) treating the layer at least once with microwave radiation, so that the regions of the layer which have been equipped with the susceptor, and also, where appropriate, the regions of the layer situated thereunder which have the susceptor, are bonded to one another via fusion or sintering.

2. Process according to Claim 1,
**characterized in that**
step c) is carried out after each of step a) and step b) has been executed x times, where x is from
1 to the number of steps a) and b) carried out.

3. The process according to Claim 1,
**characterized in that**
step c) is initially carried out once after step a) has been carried out once and step b) has been carried out and then step a) has again been carried out once, and then the further steps are carried out in the sequence b), a), and c).

4. Process according to any of Claims 1 to 3,
**characterized in that**
steps a) and b) are repeated until all of the cross sections which compose the three-dimensional object are present within a matrix, and the outer limits of the object are formed by the boundary between powder material with susceptor applied and untreated powder material, and step c) is then carried out.

5. Process according to Claim 4,
**characterized in that**
step c) is carried out in the lower construction chamber of the apparatus.

6. Process according to any of Claims 1 to 5,
**characterized in that**
step c) is carried out in an apparatus other than the apparatus for carrying out steps a) and b).

7. Process according to any of Claims 1 to 6,
**characterized in that**
step c) is carried out in commercially available food-preparation microwave equipment.

8. Process according to any of Claims 1 to 7, **characterized in that**
the pulverulent substrate used has a median grain size of from 10 to 150 µm.

9. Process according to at least one of Claims 1 to 8,
**characterized in that**
use is made of microwave radiation in the frequency range from 430 to 6 800 MHz.

10. Process according to at least one of Claims 1 to 9,
**characterized in that**
the susceptor used comprises powders of metals or metal compounds, or comprises ceramic powders, graphite, or activated charcoal, or protic liquids selected from the group consisting of saturated mono- or polyhydric linear, branched, or cyclic aliphatic alcohols, undiluted or in a mixture with water, or comprises water alone.

11. Process according to Claim 10,
**characterized in that**
the protic liquid used comprises glycerol, trimethylolpropane, ethylene glycol, diethylene glycol or butanediol, or a mixture of these, undiluted or in a mixture with water.

12. Process according to any of Claims 1 to 11,
**characterized in that**
the pulverulent substrate used comprises polymers.

13. Process according to Claim 12,
**characterized in that**
the pulverulent substrate used comprises polymers or copolymers preferably selected from polyester, polyvinyl chloride, polyacetal, polypropylene, polyethylene, polystyrene, polycarbonate, PMMI, PMMA, ionomer, polyamides, copolyester, copolyamides, terpolymers, ABS, or a mixture of these.

14. Process according to any of Claims 1 to 13,
**characterized in that**
use is made of a pulverulent substrate which has from 0.05 to 5% by weight of a flow aid.

15. Process according to any of Claims 1 to 14,
**characterized in that**
use is made of a pulverulent substrate which comprises inorganic fillers.

16. Process according to Claim 15,
**characterized in that**
the fillers used comprise glass beads.

17. Process according to any of Claims 1 to 16,
**characterized in that**
use is made of a pulverulent substrate which comprises inorganic or organic pigments.

18. Process according to any of Claims 1 to 17,
**characterized in that**
use is made of a pulverulent substrate which comprises laser-activatable additives.

19. Process according to any of Claims 1 to 11,
**characterized in that**
the pulverulent substrate used with a material which can be fused or sintered via exposure to heat comprises coated grains composed of sand, ceramics, metal, and/or alloy, or comprises metal powders.

20. Apparatus for the layer-by-layer production of three-dimensional objects, where the apparatus comprises
- a movable apparatus for applying layers of a pulverulent substrate to an operating platform or to a layer of a treated or untreated pulverulent substrate which may by this stage be present on the operating platform, and
- a microwave generator suitable for generating microwave radiation in the range from 300 MHz to 300 GHz,
**characterized by**
an apparatus movable in the x,y plane, for applying a susceptor to selected regions of the layer composed of pulverulent substrate.

21. Molding produced by a process according to any of Claims 1 to 19.

22. Molding according to Claim 21,
**characterized in that**
the molding comprises fillers, selected from glass bead, silicas, or metal particles, or comprises aluminum particles.

## Revendications

1. Procédé pour la production d'un objet tridimensionnel, comprenant :
a) la préparation d'une couche d'un substrat en forme de poudre, **caractérisé par** les étapes
b) application sélective d'au moins un suscepteur absorbant des micro-ondes sur des zones à traiter de la couche de a), les zones, sur lesquelles le suscepteur est déposé, étant choisies selon la section transversale de l'objet tridimensionnel et ce de manière telle qu'on n'applique du suscepteur que sur les zones qui forment la section transversale de l'objet tridimensionnel, et
c) traitement au moins une fois de la couche par le rayonnement de micro-ondes, de manière telle que les zones pourvues du suscepteur de la couche ainsi que le cas échéant les zones pourvues du suscepteur de la couche sous-jacente sont assemblées l'une avec l'autre par fusion ou frittage.

2. Procédé selon la revendication 1, **caractérisé en ce que** l'étape c) est réalisée après que l'étape a) et l'étape b) ont été réalisées chacune x fois, x valant 1 jusqu'au nombre d'étapes a) et b) réalisées.

3. Procédé selon la revendication 1, **caractérisé en ce qu'**on réalise au début une fois l'étape c), puis une fois l'étape a), ensuite l'étape b) et ensuite encore une fois l'étape a), puis on réalise les autres étapes dans l'ordre b), a) et c).

4. Procédé selon l'une quelconque des revendications 1 à 3, **caractérisé en ce que** les étapes a) et b) sont répétées tant de fois jusqu'à ce que toutes les surfaces de la section transversale à partir desquelles l'objet tridimensionnel est construit, se trouvent dans une matrice et que les limitations extérieures de l'objet soient formées par la limite entre le matériau poudreux avec le suscepteur appliqué et le matériau poudreux non traité, puis on réalise l'étape c).

5. Procédé selon la revendication 4, **caractérisé en ce que** l'étape c) est réalisée dans l'espace inférieur du dispositif.

6. Procédé selon l'une quelconque des revendications 1 à 5, **caractérisé en ce que** l'étape c) est réalisée dans un autre appareil que l'appareil pour la réalisation des étapes a) et b).

7. Procédé selon l'une quelconque des revendications 1 à 6, **caractérisé en ce que** l'étape c) est réalisée dans un four à micro-ondes usuel du commerce destiné à la préparation d'aliments.

8. Procédé selon l'une quelconque des revendications 1 à 7, **caractérisé en ce que** le substrat en forme de poudre utilisé présente une granulométrie moyenne de 10 à 150 µm.

9. Procédé selon au moins l'une quelconque des revendications 1 à 8, **caractérisé en ce qu'**on utilise un rayonnement de micro-ondes dans la plage de fréquences de 430 à 6800 MHz.

10. Procédé selon au moins l'une quelconque des revendications 1 à 9, **caractérisé en ce qu'**on utilise comme suscepteur de la poudre de métaux ou des composés métalliques, de la poudre céramique, du graphite ou du charbon actif ou des liquides protiques, choisis dans le groupe constitué par les alcools aliphatiques saturés, monovalents ou polyvalents, linéaires, ramifiés ou cycliques, en masse ou en mélange avec de l'eau ou l'eau seule.

11. Procédé selon la revendication 10, **caractérisé en ce qu'**on utilise comme liquide protique du glycérol, du triméthylolpropane, de l'éthylèneglycol, du diéthylèneglycol ou du butanediol ou des mélanges de ceux-ci en masse ou en mélange avec de l'eau.

12. Procédé selon l'une quelconque des revendications 1 à 11, **caractérisé en ce qu'**on utilise des polymères comme substrat en forme de poudre.

13. Procédé selon la revendication 12, **caractérisé en ce qu'**on utilise comme substrat en forme de poudre des polymères ou des copolymères, de préférence choisis parmi le polyester, le poly(chlorure de vinyle), le polyacétal, le polypropylène, le polyéthylène, le polystyrène, le polycarbonate, le PMMI, le PMMA, l'ionomère, les polyamides, les copolyesters, les copolyamides, les terpolymères, l'ABS ou les mélanges de ceux-ci.

14. Procédé selon l'une quelconque des revendications 1 à 13, **caractérisé en ce qu'**on utilise un substrat d'un adjuvant poudre, qui présente 0,05 à 5% en poids d'un adjuvant d'écoulement.

15. Procédé selon l'une quelconque des revendications 1 à 14, **caractérisé en ce qu'**on utilise un substrat en forme due poudre, qui présente des charges inorganiques.

16. Procédé selon la revendication 15, **caractérisé en ce qu'**on utilise des billes de verre comme corps de remplissage.

17. Procédé selon l'une quelconque des revendications 1 à 16, **caractérisé en ce qu'**on utilise un substrat en forme de poudre, qui présente des pigments inorganiques ou organiques.

18. Procédé selon l'une quelconque des revendications 1 à 17, **caractérisé en ce qu'**on utilise un substrat en forme de poudre qui présente des additifs activables au laser.

19. Procédé selon l'une quelconque des revendications 1 à 11, **caractérisé en ce qu'**on utilise comme substrat en forme de poudre avec un matériau qui peut être fritté ou fondu sous l'effet de la chaleur, des grains revêtus de sable, de céramique, de métal et/ou d'alliages ou de poudre métallique.

20. Dispositif pour la fabrication par couches d'objets tridimensionnels, où le dispositif présente
- un dispositif mobile pour l'application par couches d'un substrat en forme de poudre sur une plate-forme de travail ou sur une couche le cas échéant déjà présente sur la plate-forme de travail d'un substrat en forme de poudre traité ou non traité, et
- un générateur de micro-ondes, approprié pour générer un rayonnement de micro-ondes dans la plage de 300 MHz à 300 GHz,
**caractérisé par** un dispositif mobile dans le plan x, y pour appliquer un suscepteur sur des zones choisies de la couche en substrat en forme de poudre.

21. Corps façonné, produit selon un procédé selon l'une quelconque des revendications 1 à 19.

22. Corps façonné selon la revendication 21, **caractérisé en ce que** le corps façonné présente des corps de charge, choisis parmi les billes de verre, les silices ou les particules métalliques ou les particules d'aluminium.
